# EUROPÄISCHE PATENTSCHRIFT

(11) **EP 1 209 799 B1**
(45) Veröffentlichungstag und Bekanntmachung des Hinweises auf die Patenterteilung: **11.07.2007**
(21) Anmeldenummer: 01127908.0
(22) Anmeldetag: 23.11.2001
(51) Int. Cl.: H02K 1/27, H02K 7/08, H02K 5/128

(54) **Rotor einer elektrischen Maschine und Verfahren zu dessen Herstellung**
Rotor of an electric machine and method for manufacturing the same
Rotor d'une machine électrique et son procédé de fabrication

(30) Priorität: 23.11.2000 DE 10058267
(43) Veröffentlichungstag der Anmeldung: 29.05.2002
(73) Patentinhaber: WILO AG, 44263 Dortmund (DE)
(72) Erfinder: Kaul, Günter, 58456 Witten (DE)
(74) Vertreter: COHAUSZ DAWIDOWICZ HANNIG & SOZIEN

(56) Entgegenhaltungen:
- EP-A- 1 024 584
- DE-A- 3 622 231
- DE-A- 19 615 277
- DE-U- 29 504 640
- US-A- 4 414 523

## Beschreibung

Die Erfindung betrifft einen Rotor für eine elektrische Maschine, insbesondere für einen Elektromotor einer Spaltrohrpumpe, umfassend ein Rotorpaket mit mehreren Magneten, das drehfest mit einer Welle verbunden ist, wobei an mindestens einer Stirnseite des Rotorpakets eine das Rotorpaket abdeckende Abdeckscheibe angeordnet ist, wobei ein Axiallager zur axialen Lagerung des Rotors in die Abdeckscheibe integriert ist.

Derartige Rotoren sind an elektrischen Maschinen bekannt, bei denen der Rotor in Kontakt mit Flüssigkeiten, insbesondere in Kontakt mit der von einer durch die elektrische Maschine angetriebenen Spaltrohrpumpe geförderten Flüssigkeit kommt. Dabei ist es bekannt, das Rotorpaket zum Schutz vor Korrosion an einer oder beiden Stirnseiten durch Abdeckscheiben abzudecken.

Das deutsche Gebrauchsmuster 295 04 640 U offenbart beispielsweise einen Rotor für einen Spaltrohrmotor mit einem Rotorpaket mit Aluminiumstäben zur Schutz vor Korrosion, die einstückig mit stirnseitig angeordneten Kurzschlussringen aus Aluminium verbunden sind. An einem axialen Ende des Rotors liegt eine Axiallagerscheibe außen an dem zugeordneten Kurzschlussring an und bildet damit mittelbar eine Abdeckscheibe, die durch einen sie gegenüber der Welle dichtenden O-Ring vom Rotorpaket getrennt ist. Dieser O-Ring liegt mit radialer Vorspannung an der Motorwelle und mit axialer Vorspannung an der Innenseite der Axiallagerscheibe an. Insbesondere kann der Rotor zum Schutz vor Korrosion auch außen von einer dünnen Hülse umgeben sein, in die die Abdeckscheibe an der Stirnseite des Rotors eingesetzt wird. Die Hülse weist eine umgebördelte Endzone zur Ausbildung einer Kehle zwischen Hülse und Axiallagerscheibe auf, in welche ein O-Ring zur Abdichtung der Axiallagerscheibe eingelegt ist.

Zur axialen Lagerung des Rotors ist es erforderlich, mindestens ein Axiallager am Rotor oder auf der Welle des Rotors anzuordnen. Eine relativ aufwendige Möglichkeit besteht dabei darin, ein Axiallager auf die Welle aufzuschrumpfen und die Lauffläche des Axiallagers anschließend auf die geforderten Toleranzen abzuschleifen.

Zur Reduzierung dieses fertigungstechnischen Aufwandes und der damit verbundenen hohen Kosten ist es ferner bekannt, das Axiallager in einem elastischen, insbesondere aus Gummi bestehenden Aufnahmeteil anzuordnen, das auf die Welle aufgeschoben wird. Das Abschleifen der Lagerlauffläche ist dabei nicht mehr erforderlich. Jedoch bedeutet das Aufnahmeteil als separates Bauteil einen zusätzlichen Montageaufwand und damit verbundene höhere Kosten sowie zusätzlichen Bauraumbedarf.

DE 196 15 277 offenbart einen Rotor mit den Merkmalen des Oberbegriffs des Anspruchs 1.

Aufgabe der vorliegenden Erfindung ist es daher, einen konstruktiv einfachen, und preiswert herzustellenden Rotor der eingangs genannten Art zu schaffen, der bei geringem Gewicht und geringem Bauraumbedarf ohne zusätzliche Bauteile axial gelagert werden kann und somit eine besonders einfache Handhabung und Montage gewährleistet. Ferner soll ein einfaches und schnelles Verfahren zur Herstellung eines solchen Rotors bereit gestellt werden.

Diese Aufgabe wird erfindungsgemäß durch eine Vorrichtung nach Anspruch 1 bzw. durch ein Verfahren nach Anspruch 12 gelöst. Vorteilhafte Ausgestaltungen und Weiterbildungen der Erfindung ergeben sich aus den abhängigen Ansprüchen.

Die erfindungsgemäße Lösung geht von dem Gedanken aus, dass eine relativ einfache und kostengünstige Montage des Rotors auch ohne zusätzliches Blauteil möglich ist, wenn gemäß der Erfindung ein Axiallager zur axialen Lagerung des Rotors in die Abdeckscheibe integriert ist.

Der Hauptvorteil liegt dabei darin, dass sowohl auf ein separates Bauteil als auch auf einen Verfahrensschritt bei der Montage des Rotors verzichtet werden kann. Auf diese Weise kann der erfindungsgemäße Rotor wesentlich kostengünstiger hergestellt und montiert werden. Durch die Integration des Axiallagers in die Abdeckscheibe wird außerdem bei einfacher Konstruktion des Rotors erheblicher Bauraum eingespart, so dass die elektrische Maschine wesentlich kleinbauender ausgeführt werden kann.

Besonders vorteilhaft ist es, wenn das Rotorpaket von einer vorzugsweise aus Blech gefertigten Hülse umgeben ist, die das Rotorpaket axial an mindestens einer Seite mit einem Randbereich überragt, in dem die Abdeckscheibe mit dem integrierten Axiallager angeordnet ist. Vorzugsweise wird hierzu vorgeschlagen, dass die Hülse das Rotorpaket axial an beiden Stirnseiten jeweils mit einem Randbereich überragt, wobei in jedem Randbereich eine Abdeckscheibe derart vorgesehen ist, dass der Rotor flüssigkeitsdicht abgedichtet ist und wobei in einer oder in beiden Abdeckscheiben ein Axiallager integriert ist. Auf diese Weise kann das Eindringen von Wasser bzw. der von einer Spaltrohrpumpe geförderten Flüssigkeit sicher und dauerhaft verhindert und somit ein hoher Schutz vor Korrosion und vor Unwuchten des Rotors erreicht werden.

Die Abdeckscheibe bzw. die Abdeckscheiben sind aus Kunststoff gefertigt, was mit einer besonders einfachen und passgenauen Fertigung sowie mit einem geringen Gewicht verbunden ist.

Gemäß einer besonders bevorzugten Ausführungsform der Erfindung wird vorgeschlagen, dass die im Innern der Hülse zwischen den beiden Abdeckscheiben ausgebildeten Freiräume vollständig mit Kunststoff ausgefüllt sind. Vorzugsweise kann hierbei der die Freiräume ausfüllende Kunststoff einstückig an eine oder an beide Abdeckscheiben angegossen oder angespritzt sein. Hierdurch wird insbesondere der Vorteil erreicht, dass sämtliche Frei- und Zwischenräume des Rotors dauerhaft mit einer Kunststoffmasse ausgefüllt sind und somit für eindringendes Wasser kein Raum mehr zur Verfügung steht. Hierdurch können die Bestandteile des Rotors, insbesondere die Magnete nicht mehr von geförderten Flüssigkeiten angegriffen werden. Auch können Unwuchterscheinungen durch in den Rotor eindringende Flüssigkeit dabei nicht mehr auftreten. Vorzugsweise wird die Verwendung von Polyamid oder Polypropylen vorgeschlagen.

Das Axiallager ist in einem Aufnahmeteil aus Kunststoff aufgenommen, insbesondere eingegossen oder eingespritzt, und das Aufnahmeteil ist in eine Abdeckscheibe eingegossen oder eingespritzt. Der Kunststoff des Aufnahmeteils ist weicher als der Kunststoff der Abdeckscheibe, in der das Aufnahmeteil aufgenommen ist. Hierzu wird weiterhin vorgeschlagen, dass das Aufnahmeteil vorzugsweise aus einem hochelastischen und/oder gummiartigen Kunststoff besteht. Hierdurch kann sich das Axiallager in der gleichen Weise ausrichten, wie es bei der bisher bekannten Verwendung eines separaten Aufnahmeteils möglich ist.

Auf besonders einfache Weise kann das Axiallager kraft- und/oder formschlüssig in dem Aufnahmeteil aufgenommen sein. Hierbei kann ein besonders sicherer Halt des Axiallagers dadurch erreicht werden, dass die Mantelfläche des Axiallagers eine konische Form aufweist, wobei der Durchmesser in Richtung zum Rotorpaket hin größer wird.

Das Axiallager kann insbesondere als Gleitlager ausgeführt sein, wobei es vorzugsweise durch eine Keramikscheibe gebildet ist.

Das erfindungsgemäße Herstellungsverfahren umfasst die folgenden Verfahrensschritte:

Zunächst wird das Rotorpaket mit dem Magneten auf die Welle aufgeschoben, danach wird das Rotorpaket insbesondere durch einen Stanz- oder Pressvorgang drehfest mit der Welle verbunden. Dann wird eine Hülse vorzugsweise mit einem Presssitz auf das Rotorpaket bzw. auf die Magnete des Rotorpakets aufgeschoben, bevor der Rotor abschließend in eine Spritzform eingelegt und das Rotorpaket mit Kunststoff umspritzt wird.

Bei dem Spritzvorgang wird in der Abdeckscheibe eine Ausnehmung für das Aufnahmeteil vorgesehen. Danach wird in einem zweiten Spritzvorgang das Aufnahmeteil mit Kunststoff in die Ausnehmung der Abdeckscheibe hineingespritzt, wobei das Axiallager entweder nach dem zweiten Spritzvorgang in eine entsprechende Ausnehmung des Aufnahmeteils eingesetzt oder bei einer vorher erfolgten Fixierung in der gewünschten Position relativ zum Rotorpaket von dem Aufnahmeteil umspritzt wird.

Besonders günstig ist es dabei, dass nach dieser Fertigung bei der Montage des Rotors zur Auswuchtung auf einfache Weise Material aus den Abdeckscheiben entnommen werden kann.

Gegenstand der vorliegenden Erfindung ist auch eine mit einem Rotor der vorstehend beschriebenen Art ausgeführte elektrische Maschine, die insbesondere als Elektromotor einer Spaltrohrpumpe ausgeführt sein kann.

Weitere Vorteile und Merkmale der Erfindung ergeben sich aus der nachfolgenden Beschreibung und den in den Zeichnungen dargestellten Ausführungsbeispielen. Es zeigen:
- Figur 1:: halbgeschnittene Stirnansicht eines erfindungsgemäßen Rotors
- Figur 2:: Schnittansicht entlang des Schnittes A-A aus Figur 1
- Figur 3:: Vergrößerte Teilansicht entlang des Schnittes A-A aus Figur 1 bei einem Rotor, der kein Ausführungsbeispeil der Erfindung ist.

Der in den Figuren dargestellte Rotor 1 gehört zu einem nicht näher dargestellten Elektromotor, der eine ebenfalls nicht dargestellte Spalttopfpumpe antreibt. Er umfasst ein Rotorpaket 2, das drehfest auf der Motorwelle 3 befestigt ist. Das Rotorpaket 2 kann dabei insbesondere aus mehreren Blechscheiben bestehen, die zu einem Blechpaket zusammengestanzt sind und dabei eine drehfeste Verbindung mit der Motorwelle 3 eingehen.

An seinem äußeren Umfang weist das Rotorpaket 2 vier sich in Längsrichtung erstreckende Ausnehmungen 4 auf, in denen jeweils ein Permanentmagnet 5 aufgenommen ist. Die Magneten 5 erstrecken sich dabei ebenso wie die Ausnehmungen 4 über die gesamte Länge des Rotorpakets 2. Vorzugsweise sind die Magnete 5 in den Ausnehmungen 4 auf das Rotorpaket 2 aufgeklebt, so dass sie in Umfangsrichtung stoffschlüssig und formschlüssig an dem Rotorpaket 2 und somit an der Motorwelle 3 befestigt sind.

Der Rotor 1 kommt als Nassläufer in dem Spalttopfmotor in unmittelbaren Kontakt mit der von der Spalttopfpumpe geförderten Flüssigkeit. Um die Magnete 5 vor schädlichen Einflüssen der geförderten Flüssigkeit, insbesondere vor Korrosion zu schützen, sind die Magnete 5 außenseitig von einer eng anliegenden Hülse 6 umgeben. Die Hülse 6 besteht aus nicht rostendem Material, vorzugsweise aus VA-Stahl und hat eine relativ geringe Wanddicke von ca. 0,1 bis 0,2 mm, so dass ein geringer Spaltabstand zwischen den Magneten 5 und den außerhalb des Spalttopfes angeordneten Ständerwicklungen des Stators eingehalten und somit ein hoher Motorwirkungsgrad erreicht werden kann. Auch presst die Hülse 6 die Magneten 5 zusätzlich auf das Rotorpaket 2 und wirkt somit den bei Betrieb des Motors auf die Magnete 5 wirkenden Fliehkräfte entgegen.

Die axiale Länge der Hülse 6 ist größer als die axiale Länge des Rotorpakets 2, so dass die Hülse 6 das Rotorpaket 2 an beiden Seiten in axialer Richtung jeweils mit einem Randbereich 7 überragt. Innerhalb der beiden Randbereiche 7 befindet sich jeweils eine Abdeckscheibe 8, die sich über den gesamten Umfang von der Motorwelle 3 bis an den Randbereich 7 der Hülse 6 erstreckt. Die Abdeckscheiben 8 sind dabei an ihrem Innenumfang 9 gegen die Motorwelle 3 und an ihrem Außenumfang gegen den Randbereich 7 der Hülse 6 angedichtet, so dass die geförderte Flüssigkeit nicht an das Rotorpaket 2 oder in die Hülse 6 gelangen kann.

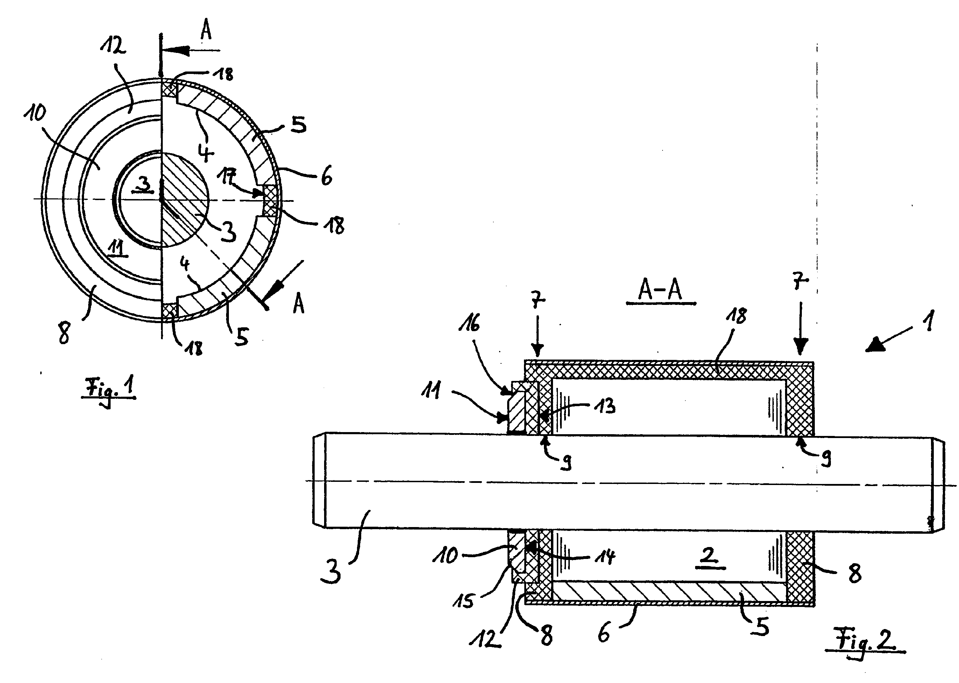

In die in Figur 2 links dargestellte Abdeckscheibe 8 ist ein Axiallager 10 zur axialen Lagerung des Rotors 1 integriert. Das Axiallager 10 ist als Gleitlager ausgeführt und besteht aus einer Keramikscheibe, deren vom Rotorpaket 2 abgewandte Stirnseite die eigentliche axiale Lagerfläche 11 bildet.

Das Axiallager 10 ist mittels eines aus einem weichen Kunststoff bestehenden Aufnahmeteils 12 mittelbar in die Abdeckscheibe 8 eingespritzt. Dazu weist die Abdeckscheibe 8 eine koaxiale Ausnehmung 13 auf, in die das Aufnahmeteil 12 eingespritzt ist. In den Aufnahmeteil 12 ist wiederum eine koaxiale Aufsnehmung 14 vorgesehen, in der das Axiallager 10 aufgenommen ist.

Der der Lagerfläche 11 zugewandte Bereich 15 der Mantelfläche des Axiallagers 10 ist konisch abgeschrägt und wird von einem entsprechend abgeschrägten radial nach innen weisenden Kragen 16 übergriffen. Auf diese Weise ist das Axiallager 10 sowohl kraftschlüssig als auch formschlüssig in dem Aufnahmeteil 12 gesichert, welches wiederum kraftschlüssig und/oder stoffschlüssig in der Abdeckscheibe 8 aufgenommen ist. Auf diese Weise kann auf ein separates Aufnahmeteil für das Axiallager 10 des Rotors 1 verzichtet werden, dass bei den bisher bekannten Ausführungsformen in einem separaten Fügevorgang auf die Motorwelle 3 bis zu dem gewünschten Abstand von der Abdeckscheibe 8 aufgeschoben werden musste.

Die sich im Innern der Hülse 6 in Umfangsrichtung zwischen den Magneten 5 erstreckenden Freiräume 17 sind vollständig mit Kunststoff 18 ausgefüllt. Der in den Freiräumen 17 vorhandene Kunststoff 18 ist dabei einstückig an die ebenfalls aus Kunststoff gefertigten Abdeckscheiben 8 angegossen. Grundsätzlich können hierbei alle Arten von Kunststoff zur Anwendung kommen, insbesondere gut spritzbare Thermoplaste oder Duroplaste. Besonders günstig ist es, wenn es harte Kunststoffe, vorzugsweise Polyamid oder Polypropylen sind, die ggf. durch die Zugabe von Glasfasern noch zusätzlich verstärkt werden können. Durch die einstückige Ausbildung der Abdeckscheiben 8 mit dem die Freiräume 17 ausfüllenden Kunststoff 18 ist eine besonders schnelle und einfache Fertigung des Rotors 1 möglich.

Durch die Ausfüllung der Freiräume 17 mit Kunststoff 18 sind innerhalb der Hülse 6 keine Hohlräume im Rotor 1 vorhanden, die bei eventuell auftretenden Undichtigkeitsstellen bei den Abdichtungen der Abdeckscheiben 8 sich mit der geförderten Flüssigkeit füllen könnten. Auf diese Weise wird einerseits unerwünschten Unwuchterscheinungen vorgebeugt und andererseits ein hochwirksamer Korrosionsschutz für das Rotorpaket 2 und insbesondere für die Magnete 5 des Rotors 1 erreicht.

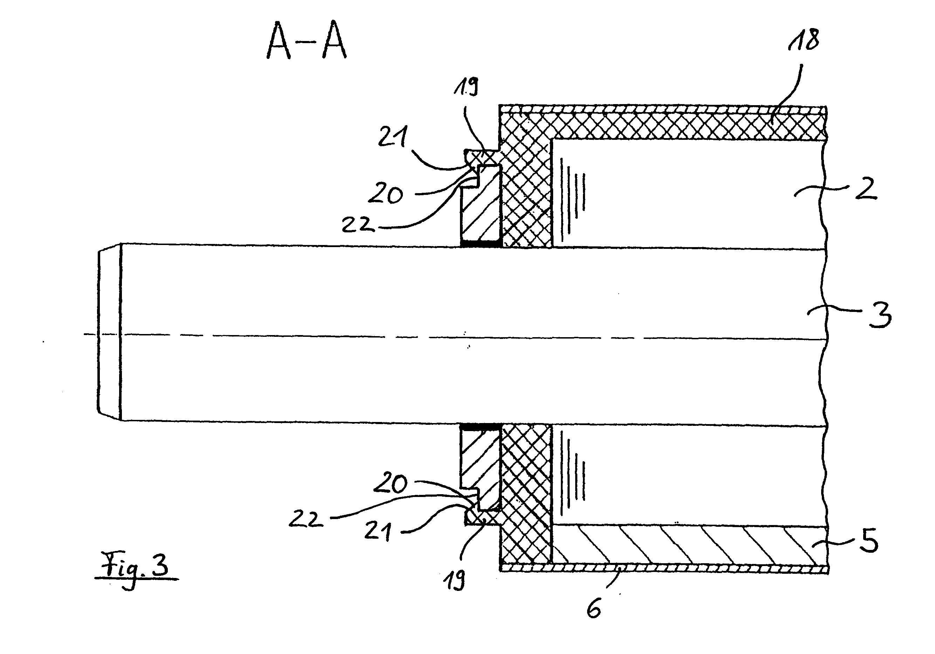

Bei dem in Figur 3 dargestellten Rotor, der kein Ausführungsbeispiel der Erfindung ist, sind an die Abdeckscheibe 8 acht gleichmäßig über den Umfang des Axiallagers 10 verteilte Haltearme 19 angeformt, die an ihrem freien Ende in radialer Richtung elastisch nach außen federn können. An den freien Enden jedes Haltearms 19 ist jeweils ein nach innen gerichteter Vorsprung 20 ausgebildet, hinter denen das Axiallager 10 über eine über seinen gesamten Umfang umlaufende Stufe 22 in axialer Richtung formschlüssig gehalten ist. Auch sind am freien Ende der Haltearme 19 radial innenliegend jeweils Einsatzschrägen 21 ausgebildet um das Einsetzen des Axiallagers 10 zu erleichtern.

## Patentansprüche

1. Rotor (1) für eine elektrische Maschine, insbesondere für einen Elektromotor einer Spaltrohrpumpe, umfassend ein Rotorpaket (2), das drehfest mit einer Welle verbunden ist, wobei an mindestens einer Stirnseite des Rotorpakets(2) eine das Rotorpaket (2) abdeckende Abdeckscheibe (8) angeordnet ist und wobei ein Axiallager (10) zur axialen Lagerung des Rotors (1) in die Abdeckscheibe (8) integriert ist
**dadurch gekennzeichnet,**
- **dass** das Rotorpaket mehrere Magnete (5) aufweist,
- **dass** das Axiallager (10) in einem Aufnahmeteil (12) aus Kunststoff aufgenommen, insbesondere eingegossen oder umspritzt ist und das Aufnahmeteil (12) in die Abdeckscheibe (8) eingegossen oder umspritzt ist und
- **dass** die Abdeckscheibe (8) aus Kunststoff gefertigt ist, wobei der Kunststoff des Aufnahmeteils (12) weicher ist als der Kunststoff der Abdeckscheibe (8), in der das Aufnahmeteil (12) aufgenommen ist.

2. Rotor nach Anspruch 1, **dadurch gekennzeichnet, dass** das Rotorpaket (2) von einer vorzugsweise aus Blech gefertigten Hülse (6) umgeben ist, die das Rotorpaket (2) axial an mindestens einer Seite mit einem Randbereich (7) überragt, in dem die Abdeckscheibe (8) mit dem integrierten Axiallager (10) angeordnet ist.

3. Rotor nach Anspruch 2, **dadurch gekennzeichnet, dass** die Hülse (6) das Rotorpaket (2) axial an beiden Stirnseiten jeweils mit einem Randbereich (7) überragt, wobei in jedem Randbereich (7) eine Abdeckscheibe (8) derart vorgesehen ist, dass der Rotor (1) flüssigkeitsdicht abgedichtet ist, und wobei in einer oder in beiden Abdeckscheibe(n) (8) ein Axiallager (10) integriert ist.

4. Rotor nach einem der vorherigen Ansprüche, **dadurch gekennzeichnet, dass** die Abdeckscheibe(n) (8) aus Kunststoff gefertigt ist bzw. sind.

5. Rotor nach Anspruch 3 und insbesondere nach Anspruch 4, **dadurch gekennzeichnet, dass** die im Inneren der Hülse (6) zwischen den beiden Abdeckscheiben (8) ausgebildeten Freiräume (17) vollständig mit Kunststoff (18) ausgefüllt sind.

6. Rotor nach Anspruch 5, **dadurch gekennzeichnet, dass** der die Freiräume (17) ausfüllende Kunststoff (18) einstückig an eine oder beide Abdeckscheiben (8) angegossen oder angespritzt ist.

7. Rotor nach Anspruch 1, **dadurch gekennzeichnet, dass** das Aufnahmeteil (12) aus einem hochelastischen und/oder gummiartigen Kunststoff gefertigt ist.

8. Rotor nach einem der Ansprüche 2 bis 7, **dadurch gekennzeichnet, dass** das Axiallager (10) kraftschlüssig und/oder formschlüssig in dem Aufnahmeteil (12) aufgenommen ist.

9. Rotor nach Anspruch 8, **dadurch gekennzeichnet, dass** die Mantelfläche des Axiallagers (10) einen konisch geformten Bereich (15) aufweist, wobei der Durchmesser in Richtung zum Rotorpaket (2) hin größer wird.

10. Rotor nach einem der vorherigen Ansprüche, **dadurch gekenn-zeichnet, dass** das Axiallager (10) ein Gleitlager ist.

11. Rotor nach Anspruch 10, **dadurch gekennzeichnet, dass** das Axiallager (10) durch eine Keramikscheibe gebildet ist.

12. Verfahren zum Herstellen eines Rotors (1) nach einem der Ansprüche 1 bis 9, umfassend die folgenden Verfahrensschritte:
- das Rotorpaket (2) mit den Magneten (5) wird auf die Welle (3) aufgeschoben,
- das Rotorpaket (2) wird drehfest mit der Welle (3) verbunden,
- eine Hülse (6) wird vorzugsweise mit einem Preßsitz auf das Rotorpaket (2) bzw. auf die Magnete (5) des Rotorpakets (2) aufgeschoben,
- der Rotor (1) wird in eine Spritzform eingelegt und das Rotorpaket (2) wird mit Kunststoff (18) umspritzt, wobei an einer Stirnseite des Rotorpakets (2) eine des Rotorpaket (2) abdeckende Abdeckscheibe (8) von dem Kunststoff (18) gebildet wird und in der Abdeckscheibe (8) eine Ausnehmung (13) für ein Aufnahmeteil (12) zur Aufnahme eine Axiallagers (10) zur axialen Lagerung des Rotors (1) vorgesehen wird,
- das Aufnahmeteil (12) wird mit einem Kunststoff in die Ausnehmung (13) hineingespritzt, der weicher ist als der Kunststoff der Abdeckscheibe (8), wobei das Axiallager (10) entweder danach in das Aufnahmeteil (12) eingesetzt oder bei vorheriger Fixierung in der gewünschten Position relativ zum Rotorpaket (2) von dem Aufnahmeteil (12) umspritzt wird.

13. Verfahren nach Anspruch 12, **dadurch gekennzeichnet, dass** zur Auswuchtung des Rotors Material aus mindestens einer Abdeckscheibe entnommen wird.

14. Elektrische Maschine, insbesondere Elektromotor einer Spaltrohrpumpe, **dadurch gekennzeichnet, dass** sie einen Rotor nach einem der Ansprüche 1 bis 11 aufweist.

## Claims

1. Rotor (1) for an electric machine, in particular for an electric motor of a canned motor pump, including a rotor pack (2) non-rotatably connected to a shaft, a cover plate (8) covering the rotor pack (2) being arranged on at least one end face of the rotor pack (2) and an axial bearing (10) for axially supporting the rotor (1) being integrated into the cover plate (8),
**characterised in that**
- the rotor pack has a plurality of magnets (5),
- the axial bearing (10) is received, in particular cast or injection-moulded, in a receiving part (12) made of plastic and the receiving part (12) is cast or moulded into the cover plate (8), and
- the cover plate (8) is made of plastic, the plastic of the receiving part (12) being softer than the plastic of the cover plate (8) in which the receiving part (12) is received.

2. Rotor according to claim 1, **characterised in that** the rotor pack (2) is surrounded by a sleeve (6) preferably made of sheet metal which projects axially beyond the rotor pack (2) on at least one side by means of an edge region (7) in which the cover plate (8) with the integrated axial bearing (10) is arranged.

3. Rotor according to claim 2, **characterised in that** the sleeve (6) projects axially beyond the rotor pack (2) at both ends by means of respective edge regions (7), a cover plate (8) being provided in such a manner in each edge region (7) that the rotor (1) is sealed in a liquid-tight manner, and an axial bearing (10) being integrated into one or both cover plate(s) (8).

4. Rotor according to one of the preceding claims, **characterised in that** the cover plate(s) (8) is/are made of plastic.

5. Rotor according to claim 3 and, in particular, according to claim 4, **characterised in that** the free spaces (17) formed in the interior of the sleeve (6) between the two cover plates (8) are completely filled with plastic (18).

6. Rotor according to claim 5, **characterised in that** the plastic (18) filling the free spaces (17) is cast or injection-moulded in one piece on to one or both cover plates (8).

7. Rotor according to claim 1, **characterised in that** the receiving part (12) is made of a highly flexible and/or rubber-like plastic.

8. Rotor according to one of claims 2 to 7, **characterised in that** the axial bearing (10) is non-positively and/or positively received in the receiving part (12).

9. Rotor according to claim 8, **characterised in that** the circumferential surface of the axial bearing (10) has a conically shaped region (15), the diameter increasing in the direction of the rotor pack (2).

10. Rotor according to one of the preceding claims, **characterised in that** the axial bearing (10) is a plain bearing.

11. Rotor according to claim 10, **characterised in that** the axial bearing (10) is formed by a ceramic disc.

12. Method of producing a rotor (1) according to one of claims 1 to 9, including the following steps:
- the rotor pack (2) with the magnets (5) is slipped on to the shaft (3),
- the rotor pack (2) is non-rotatably connected to the shaft (3),
- a sleeve (6) is preferably slipped with a press fit on to the rotor pack (2) or on to the magnets (5) of the rotor pack (2),
- the rotor (1) is inserted into an injection mould and plastic (18) is injection-moulded around the rotor pack (2), a cover plate (8) covering the rotor pack (2) being formed by the plastic (18) on one end face of the rotor pack (2) and a recess (13) for a receiving part (12) for receiving an axial bearing (10) for axially supporting the rotor (1) being provided in the cover plate (8), and
- the receiving part (12) is injected into the recess (13) with a plastic which is softer than the plastic of the cover plate (8), either the axial bearing (10) then being inserted into the receiving part (12) or the receiving part (12) being injection-moulded around it once it is fixed in the desired position relative to the rotor pack (2).

13. Method according to claim 12, **characterised in that** material is removed from at least one cover plate in order to balance the rotor.

14. Electric machine, in particular electric motor of a canned motor pump, **characterised in that** it has a rotor according to one of claims 1 to 11.

## Revendications

1. Rotor (1) pour une machine électrique, en particulier pour un moteur électrique d'une pompe à tube d'entrefer, comprenant un paquet rotorique (2) qui est relié fixe en rotation avec un arbre, un disque de recouvrement (8) couvrant le paquet rotorique (2) étant disposé à au moins une face frontale du paquet rotorique (2) et un palier axial (10) pour le placement axial du rotor (1) étant intégré dans le disque de recouvrement (8),
**caractérisé par le fait**
- **que** le paquet rotorique présente plusieurs aimants (5),
- **que** le palier axial (10) est reçu, en particulier coulé ou surmoulé, dans une pièce de réception (12) en matière synthétique et la pièce de réception (12) est coulée ou surmoulée dans le disque de recouvrement (8) et
- **que** le disque de recouvrement (8) est fabriqué en matière synthétique, la matière synthétique de la pièce de réception (12) étant plus molle que la matière synthétique du disque de recouvrement (8) dans lequel est reçue la pièce de réception (12).

2. Rotor selon la revendication 1, **caractérisé par le fait que** le paquet rotorique (2) est entouré par une douille (6) fabriquée de préférence en tôle, qui dépasse axialement le paquet rotorique (2) d'au moins un côté par une zone de bord (7) dans laquelle le disque de recouvrement (8) est disposé avec le palier axial (10) intégré.

3. Rotor selon la revendication 2, **caractérisé par le fait que** la douille (6) dépasse axialement le paquet rotorique (2) des deux faces frontales respectivement par une zone de bord (7), un disque de recouvrement (8) étant prévu dans chaque zone de bord (7) de telle manière que le rotor (1) est étanché de manière étanche aux fluides et un palier axial (10) étant intégré dans l'un des disques de recouvrement (8) ou les deux.

4. Rotor selon l'une des revendications précédentes, **caractérisé par le fait que** le(s) disques de recouvrement (8) est ou respectivement sont fabriqué(s) en matière synthétique.

5. Rotor selon la revendication 3 et en particulier selon la revendication 4, **caractérisé par le fait que** les volumes libres (17) formés dans l'intérieur de la douille (6) entre les deux disques de recouvrement (8) sont complètement remplis de matière synthétique (18).

6. Rotor selon la revendication 5, **caractérisé par le fait que** la matière synthétique (18) remplissant les volumes libres (17) est coulée ou injectée d'une seule pièce sur l'un des disques de recouvrement (8) ou les deux.

7. Rotor selon la revendication 1, **caractérisé par le fait que** la pièce de réception (12) est fabriquée en une matière synthétique à haute élasticité et/ou du type caoutchouc.

8. Rotor selon l'une des revendications 2 à 7, **caractérisé par le fait que** le palier axial (10) est reçu à gravité et/ou à fermeture géométrique dans la pièce de réception (12).

9. Rotor selon la revendication 8, **caractérisé par le fait que** la surface d'enveloppe du palier axial (10) présente une zone (15) formée conique, le diamètre augmentant dans la direction vers le paquet rotorique (2).

10. Rotor selon l'une des revendications précédentes, **caractérisé par le fait que** le palier axial (10) est un palier lisse.

11. Rotor selon la revendication 10, **caractérisé par le fait que** le palier axial (10) est formé par un disque céramique.

12. Procédé pour la fabrication d'un rotor (1) selon l'une des revendications 1 à 9, comprenant les étapes procédurales suivantes :
- le paquet rotorique (2) avec les aimants (5) est enfilé sur l'arbre (3),
- le paquet rotorique (2) est relié fixe en rotation à l'arbre (3),
- une douille (6) est enfilée, de préférence à ajustement pressé, sur le paquet rotorique (2) ou respectivement sur les aimants (5) du paquet rotorique (2),
- le rotor (1) est mis en place dans un moule d'injection et le paquet rotorique (2) est surmoulé par une matière synthétique (18), un disque de recouvrement (8) recouvrant le paquet rotorique (2) étant formé par la matière synthétique (18) sur une face frontale du paquet rotorique (2) et un évidement (13) pour une pièce de réception (12) étant prévu pour la réception d'un palier axial (10) pour le placement axial du rotor (1),
- la pièce de réception (12) est surmoulée dans l'évidement (13) avec une matière synthétique qui est plus molle que la matière synthétique du disque de recouvrement (8), le palier axial (10) étant soit mis en place ensuite dans la pièce de réception (12) soit, dans le cas d'une fixation préalable dans la position souhaitée par rapport au paquet rotorique (2), étant surmoulé par la pièce de réception (12).

13. Procédé selon la revendication 12, **caractérisé par le fait que** de la matière est enlevée d'au moins un disque de recouvrement pour l'équilibrage du rotor.

14. Machine électrique, en particulier moteur électrique d'une pompe à tube d'entrefer, **caractérisée par le fait qu'**elle présente un rotor selon l'une des revendications 1 à 11.
